# EUROPEAN PATENT SPECIFICATION

(11) **EP 1 487 072 B1**
(45) Date of publication and mention of the grant of the patent: **30.04.2008**
(21) Application number: 04021998.2
(22) Date of filing: 09.06.2000
(51) Int. Cl.: H01S 3/098, H01S 3/0941

(54) **Transversely pumped laser**
Transversal gepumpter Laser
Laser à pompage transversal

(30) Priority: 11.06.1999 US 138906 P; 30.07.1999 US 146472 P; 24.01.2000 US 489964
(43) Date of publication of application: 15.12.2004
(62) Divisional of application: 00942041.5
(73) Proprietor: Kopf, Daniel, Dr., 6832 Röthis (AT)
(72) Inventor: Kopf, Daniel, Dr., 6832 Röthis (AT)
(74) Representative: Kaminski, Susanne

(56) References cited:
- US-A- 5 103 457
- AUS DER AU J ET AL: "FEMTOSECOND DIODE-PUMPED ND:GLASS LASER WITH MORE THAN 1 W OF AVERAGE OUTPUT POWER" OPTICS LETTERS, OPTICAL SOCIETY OF AMERICA, WASHINGTON, US, vol. 23, no. 4, 15 February 1998 (1998-02-15), pages 271-273, XP000741412 ISSN: 0146-9592
- KRAINER L ET AL: "Passively mode-locked Nd:YVO4 laser with up to 13 GHz repetition rate" SUMMARIES OF PAPERS PRESENTED AT THE CONFERENCE ON LASERS AND ELECTRO-OPTICS. CLEO 99. TECHNICAL DIGEST. POSTCONFERENCE EDITION. BALTIMORE, MD, MAY 23 - 28, 1999, CONFERENCE ON LASERS AND ELECTRO-OPTICS, NEW YORK, NY : IEEE, US, 23 May 1999 (1999-05-23), pages 58-59, XP002150237 ISBN: 0-7803-5658-6

## Description

### Field of the invention

This invention relates to the field of compact, laser-diode pumped solid state laser sources using a scheme where both the pump and the lasing mode have strong asymmetries.

### Background of the invention

High power diode-pumped lasers have been a subject of intense research recently. Powers in the range of several 100 Watts have been demonstrated from such laser systems. However, with respect to fundamental mode operation (TEM00-mode), such diode-pumped laser sources have shown only a few tens of Watts of output power even in various approaches to the matter. These TEM00, high power diode-pumped laser sources are typically based on the laser mediums Nd:YAG, Nd:Vanadate, Nd:YLF or Yb:YAG. However, in the case of generating TEM00 modelocked output (picosecond or femtosecond pulses) or TEM00 frequency doubled output (green at a wavelength of 532nm from diode-pumped Nd:Vanadate, for example), even in relatively complicated setups lower powers of the order of 10 Watts or less have been produced. Among the challenges are: keeping the overall setup simple and compact; in modelocked systems: keeping the pulse width as short as possible for subsequent nonlinear optical applications (<10 ps for Nd:Vanadate, for example), in modelocked systems using semiconductor saturable absorbers: finding a design which puts the laser safely into stable modelocking sufficiently far above the modelocked-Q-switching threshold, in intracavity frequency converted laser systems: avoiding the "green problem" or similar output instabilities.

It has long been thought that intracavity optical frequency doubling is subject to the "green problem", which results in unstable fluctuations of the frequency-converted output from the laser. Recently some setups have been disclosed which overcame this problem. This invention shows another method to avoid the green problem.

Modelocking of solid state lasers has been achieved with semiconductor saturable absorbers. However, the dynamics of the modelocking calls for high gain saturation, which can be achieved with the schemes described here. The higher the gain saturation, the lower the pulse energy density on the semiconductor saturable absorber can be, reducing the degradation rate of the semiconductor saturable absorber. High gain saturation is usually obtained by achieving high pump intensity, which is however limited by the fracture limit of laser materials. Therefore, pump powers in these types of lasers have typically been limited to 10-20 W pump power per spot in state-of-the-art Nd:Vanadate lasers, or multiple pump spots have been used, adding complexity to the system. Furthermore, thermal lensing limits the maximum pump power per spot.

US 5,103,457 discloses a diode pumped solid-state laser having a block of a lasing gain material with at least two optical surfaces and a cavity means positioned around the block to define a laser cavity which includes a mode shaping means to form an eliptical resonator mode between the optical faces within the block. A high aspect ratio pumping laser diode light source is positioned outside one of said optical faces and a means to image the pumping light beam from said sources substantially matches the elliptical resonator mode. In one embodiment the pump light beam is imaged onto a laser medium wherein the axis of the pump beam is positioned obliquely to the laser medium and the medium is in contact with a heat sink.

### Summary of the invention

The invention relates to the field of compact, laser-diode pumped solid state laser sources using a scheme where both the pump and the lasing mode have strong asymmetries. A substantially smooth asymmetric laser diode pump spot is obtained from a laser diode array source or multiple arrays, by imaging each single emitter of the array or the arrays into substantially the same spot at the laser medium. In combination with the right choice of laser medium, this results in high power laser performance. This can also give rise to high gain saturation inside the laser medium. A diode pumping setup and crystal geometry where the pump beam has not the same propagation axis as the laser mode is used. The laser medium does not necessarily have a coating reflective for the laser wavelength attached to it. In combination with an intracavity nonlinear optical element, such as a nonlinear optical crystal or a semiconductor saturable absorber, this can lead to stable intracavity nonlinear conversion and stable ultra short pulse generation, respectively. A special semiconductor saturable absorber structure for generating ultra short laser pulses is described.

Additionally, external frequency conversion schemes can be efficiently used to generate other frequencies from the ultra short pulse output. The scheme may, however, also be used for high power continuous-wave or Q-switched laser operation. According to a special embodiment of the invention, the axis of the pump light beam is adjustable by a simple adjusting means to a defined direction relative to a mounting frame of a diode array pumping device. The adjusting means compensates small tolerances on mounting of the diode array and/or at least one optical element. The adjusting means include at least one wedged window. Because of this adjustment the axis of the light beam lies in a defined plane relative to the mounting frame of the pumping device. Therefore the diode array pumping device of a laser is replaceable without any further adjustment.

### Brief description of the drawings

Fig.1a and 1b show side and top views, respectively, of the setup of a laser diode array for pumping a laser medium;
Fig.2a, 2b and 2c show cross-sectional views of the laser medium with different pump spots geometries;
Fig.3a and 3b show top and side views, respectively, according the setup of fig.1a and 1b and - in more detail - the pumping light beam optics;
Fig.4a, 4b and 4c show alternative setups for a laser medium and the related closest reflective cavity element which do not form part the invention but represent background art that is useful for understanding the invention;
Fig.5 represents the arrangement of a laser medium and a cavity fold mirror as input coupling element for the pump beam which does not form part of the invention but represents background art that is useful for understanding the invention;
Fig.6 represents the laser medium in cross-sectional view;
Fig.7 represents a cross-sectional view through a transversely pumped, transversely cooled, thin laser medium according to the invention;
Fig.8a, 8b and 8c show different embodiments of the laser diode array and the pumping light beam optics, in top and side views;
Fig.9a, 9b and 9c represent resonant cavities with different optical elements;
Fig.10 depicts a cross-sectional view of a semiconductor absorber component used as optical component in the setups according to fig.9a - 9c;
Fig.11a shows a diode pumping setup from the top and the side, the axis of the pump beam being oblique to the axis of the laser mode;
Fig.11b shows an alternative setup according to Fig.11a; Both setups do not form part of the invention but represent background art that is useful for understanding the invention;
Fig. 12a, 12b, 12c and 12d show schematic side views of the diode pumping set-up with a window for adjusting the light beam;
Fig.13a and 13b show side and top views, respectively, of a diode array pumping device on a laser system base with partially cut areas; and
Fig. 14 shows tangential (t) and sagittal (s) extension of the light beam along its axis (x) from the diode array to the laser medium.

### Description of the preferred embodiment

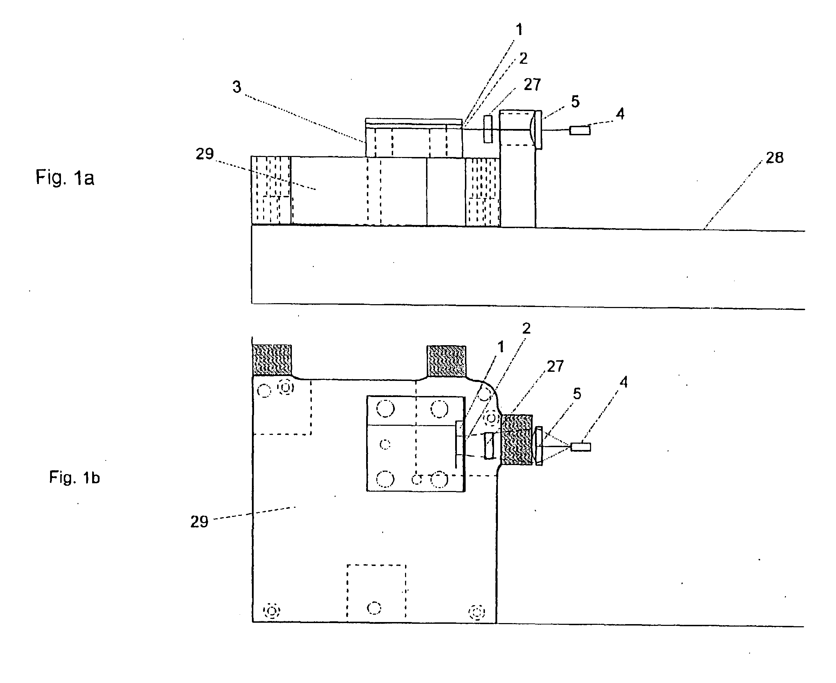

*High intensity pump:* Figure 1 shows a simple setup to focus the outcoming beam from a high power laser diode array to a high intensity spot. The laser diode light is imaged through a small number of optical elements into a laser medium. Even the addition of one or more optical elements such as a spherical or cylindrical lens still ensures a simple setup and can be used to tailor the spot size in the horizontal and vertical plane, respectively.

The laser diode used preferably emits from an emitting area which is 1 micrometer (µm; micron) in height (vertical dimension) and typically 2 mm up to 10 mm (horizontal dimension). Laser diodes with a 10 mm wide emitting area on a single chip emit output powers in the 20-60 W range in a highly non-diffraction limited beam (ca. 2000 times the diffraction limit in the horizontal dimension for a 10 mm wide emitting area). These high power diode "bars" usually consist of an array of lasers provided on the same chip: For example, a 40 W laser diode may consist of an array of 20 lasers each with a 200 wide stripe and a center-to-center spacing of 400 µm. In this case, the fill factor is 50%, corresponding to the active area divided by the total area, which also includes the inactive spacer area in between two adjacent diodes on the same chip or "bar".

Figure 1 shows the sketch of a configuration according to the invention. A laser diode array 1 - for instance with a total width of 5 mm and an emitted power of 15 W at a wavelength of 808 nm - has been used. The light from this laser diode is typically strongly diverging in the vertical axis ("fast" axis) at an angle of approximately +/- 30°, for example. Therefore, the first optical component in the imaging optics is preferably a fast-axis collimation lens 2, which collects the light in the vertical dimension, for instance a cylindrical lens with a focal length of approximately 200 µm in the vertical dimension. This lens is attached to a mount 3 on which also the laser diode chip ("bar") is mounted. In some cases, it is not necessary to use a cylindrical lens, especially as long as the emitting area aspect ratio is not much higher than 500 µm : 1 µm (horizontal dimension : vertical dimension). Generally it is preferable to use high numerical aperture (NA = 0.5 approximately) lenses which are capable of collecting all or substantially all power in the vertical dimension, where the divergence is usually much higher than in the other dimension.

For the purpose of focusing the diode laser light into a laser medium 4, a f=8mm focal length lens 5 with a high NA and good imaging quality is used, for example the item number C240TM-B from Thorlabs, Inc. This lens 5 is positioned at a distance of about 20 mm from the diode laser 1. Aspherical lenses can have the advantage of improved imaging quality and therefore higher intensity is achieved at the pump spot.

The focusing optics as described generates a bright and highly asymmetric pump beam inside the laser medium 4, which is well suited for pumping a laser cavity with a vertically squeezed laser mode inside the laser medium 4. This is described in more detail in D. Kopf, K. J. Weingarten, G. Zhang, M. Moser, A. Prasad, M. A. Emanuel, R. J. Beach, J. A. Skidmore, U. Keller, Invited Paper, "High-average-power diode-pumped femtosecond Cr:LiSAF lasers," Applied Physics B, vol. 65, pp. 235-243, 1997. The invention uses a different concept based on different focusing and on different laser gain materials. Furthermore, different crystal and pumping geometries are described.

The use of a high NA focusing lens, as mentioned above, has the advantage that a high intensity spot is generated. According to the setup described above, a pump spot is generated which is 740 µm x 20 µm (radius) in the horizontal and vertical plane, respectively. At a power of 15 Watts, this corresponds to a pump density of 32 kW/cm². With higher powers and equivalent beam parameters (divergence, stripe width) the pump intensity would go up correspondingly. This corresponds to pump densities which are hardly achieved otherwise in such a simple manner.

Based on the concept described above, a man skilled in the art can devise with similar and modified setups which also achieve a high intensity spot.

The distance between the laser diode array 1 and the focusing lens 5 can be changed which results in an astigmatism after the focusing lens, i.e. the pump beam waists in the horizontal and vertical dimension, respectively, are at different locations. The astigmatism can be used to generate a tailored and predetermined ellipticity of the pump beam at the entrance face of the laser medium 4, resulting in tailored thermal lenses in the two transverse dimensions.

Likewise, the distance between the laser diode array 1 and the focusing lens 5 can be changed in order to control the intensity distribution at the laser medium 4. It is usually preferable to achieve an as smooth as possible transverse power distribution with a negligible pattern to it. This can be accomplished if the image of the laser diode array 1 is as far away from the focal plane of the lens as possible, ideally infinitely far away. This is achieved if the laser diode array 1 is positioned one focal length away from the lens 5, which would be at a distance of 8mm in our case. Satisfactory results, however, may also be obtained in the vicinity of this condition. Applied to our setup, a substantially smooth light distribution at the pump spot is obtained if the f=8mm focusing lens is positioned 8mm beyond the laser diode array 1, with a fast axis collimating cylindrical lens 2 positioned next to the latter. A smooth light distribution results in a smooth and pattern-free thermal distribution and therefore in a thermal lens which facilitates or enables laser operation in the fundamental mode.

The laser diode array 1 is mounted on a submount 3 which is positioned on a laser system base 28. The laser diode array 1 may be constructed as a within a housing. In this case a wedged window 27 is provided for the pump beam to pass.

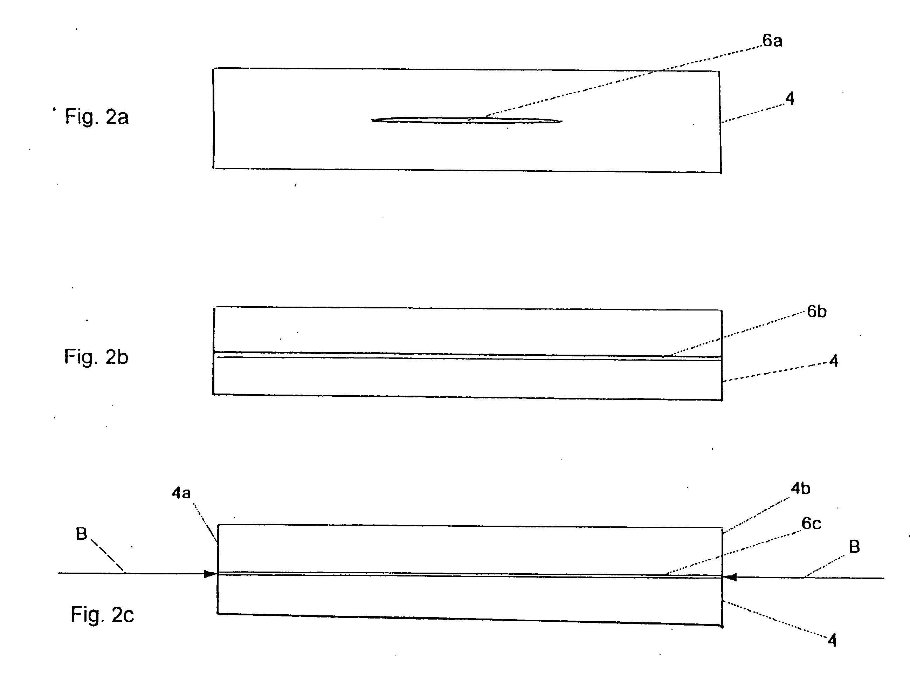

*Choice of laser gain material, crystal geometry, pumping geometry, cooling:* The highly assymetric, essentially elliptical pump spot obtained as above is focused into the laser gain material, where a great deal of the power is absorbed within the absorption length. Figure 2a shows a cross-sectional view of the laser medium 4 and the elliptical pump spot 6a. The cross-section of the laser medium 4 can be (as is here) 4 mm x 0.8 mm and the pump spot 6a can be 0.74 mm x 0.02 mm radius (as is shown schematically in Figure 2a). The vertically squeezed crystal dimension results in a predominantly one-dimensional heat flow which reduces the thermal lensing effect. The wider the beam in the horizontal plane, the more pronounced is the one-dimensionality of the heat flow, i.e. the heat flows mostly vertically. This results in a smaller thermal lens in the horizontal plane. Consequently, pumping is possible at higher power levels thus achieving higher output powers.

The highly elliptical pump spot also has the advantage of reduced thermally induced birefringence, which was shown to limit laser performance in various lasers, in particular in Nd:YAG lasers. Therefore, the setups described here can also be used to avoid thermal birefringence limitations.

A highly asymmetric pump spot 6b can also be obtained by choosing a horizontal pump spot size which is equal or almost equal to the horizontal dimension of the laser medium 4 (Figure 2b). Thereby an optimum vertical heat flow can be achieved when additionally the laser medium 4 is contacted to a heat sink at the top and the bottom only. This results in a negligibly small thermal lens in the horizontal dimension. In order to achieve scaling of modelocked or frequency converted lasers into the power range of 10 W or more, this approach can be used to overcome horizontal thermal lens limitations.

As an alternative approach, Figure 2c depicts a pumping scheme which also achieves highly elliptical pump spot 6c size but is pumped transversely (according to arrows B), i.e. from one side 4a or from both sides 4a, 4b, for example using similar focusing schemes as in the setups above. For this purpose, the sides 4a, 4b should be polished and preferably anti-reflection coated. This can be a way to combine the power of two diodes and thus increasing the total power that can be extracted from the laser cavity.

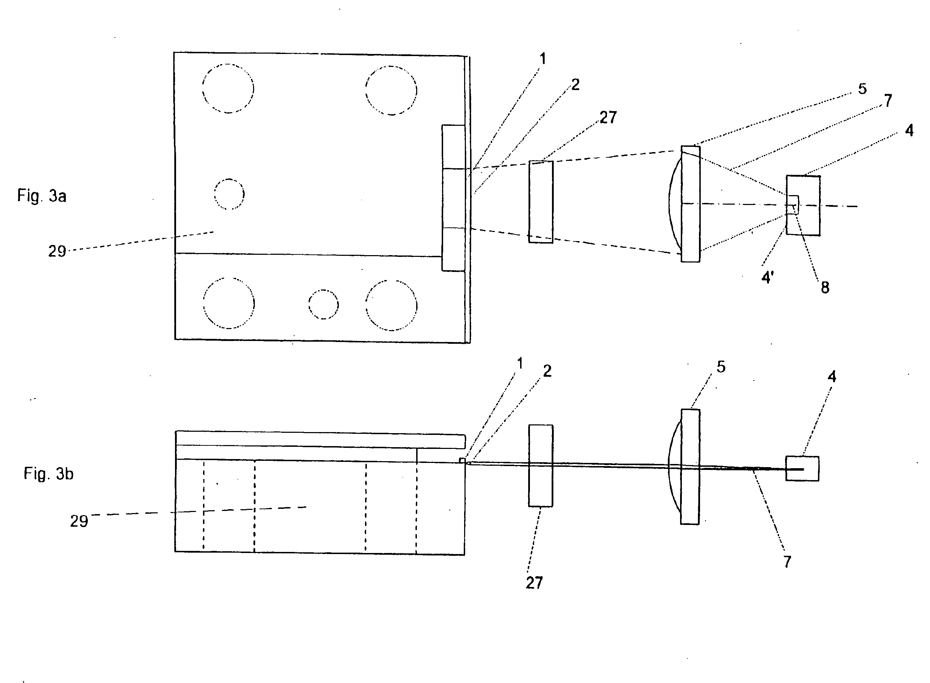

Figure3a, 3b show an overall diode-pumping scheme including the laser medium 4. The diode pump beam 7 is also schematically depicted and results in a highly elliptical pump beam.

The position of the laser medium 4 can be adjusted: The distance from the focusing lens 5 determines the actual pump spot at the entrance face 4' of the laser medium thus affecting both the laser gain and the thermal lens. This can be used to optimize laser performance, i.e. output power.

The laser medium crystallographic orientation can help reduce the horizontal thermal lens if the laser medium exhibits different thermal conductivity along the crystallographic axes. If the vertical axis is chosen to be the one with the highest heat conductivity, then again the vertical, one-dimensional heat flow is more pronounced, resulting in another reduction in the horizontal thermal lens, thereby forming a basis for further power optimization. This is the case, for example, for Cr:LiCAF, which exhibits a 10% difference in thermal conductivity for the heat flow along the two crystallographic axes.

The polarization of the cavity mode can be chosen such that it points along the crystallographic axis which has lower dn/dT, resulting in lower thermal lensing. This is, for example, interesting when using ND:YLF, which exhibits less than half the dn/dT for a polarization perpendicular to the c-axis compared to the direction parallel to the c-axis.

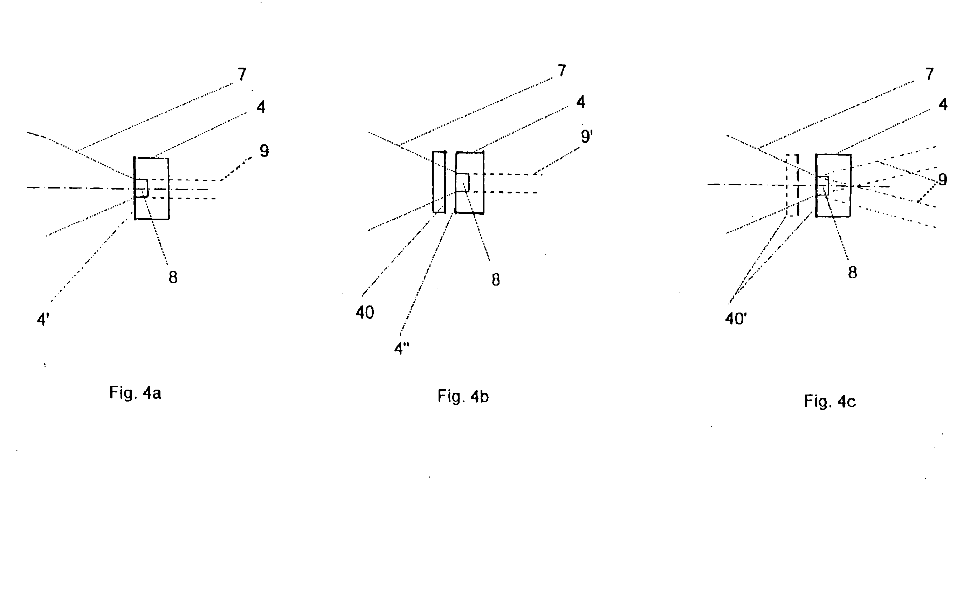

*Laser medium arrangement positioning:* Figure 4a shows an end-pumped scheme where the entrance face 4'of the laser medium is transparent for the pump beam but highly reflecting for the laser mode 9 (dashed lines to the right). As an alternative, the face of the laser medium 4' can be chosen as partially reflecting for the laser mode and thus can be used as output coupler. In this case, the laser output can be separated from the incident diode pump light by a dichroic mirror. The Laser diode pump beam 7 will be absorbed in the pump absorption region 8 of the laser medium 4.

Figure 4b shows a scheme where the laser end mirror 40 is not attached to the face 4'' of the the laser medium 4 but is an independent optical element. The laser medium 4 is adjacent to this end mirror 40. The spacing between the two elements can be substantially less than a millimeter but also several millimeters long. At sufficiently short spacings the picosecond modelocked laser produces substantially shorter pulses due to spatial hole burning. This can be used to achieve higher peak powers due to the shortened pulses.

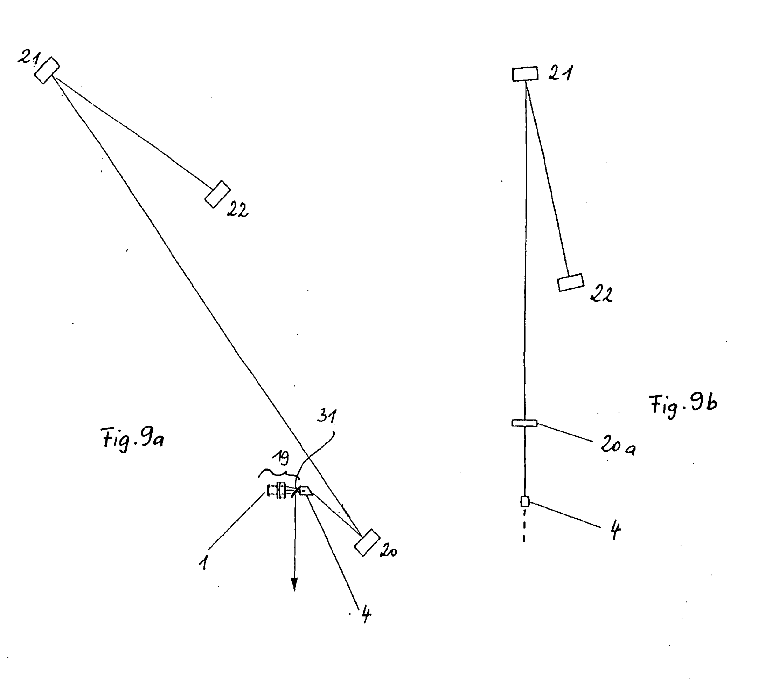

Figure 4c shows alternative setups according to Figures 4a and 4b. The face of the laser medium or the end mirror of Figures 4a and 4b do not necessarily have to be used as end mirrors but can be used as fold mirrors 40', in which case the laser mode 9" is folded and passes through the laser medium 4 four times per round trip, increasing the amount of saturation in the excited region, the pump absorption region 8, of the laser medium 4. Likewise, the cavity optics (an example is given in Fig.9a) can be arranged such that an even higher number of passes through the pumped laser medium 4 per roundtrip occurs, resulting in higher small signal gain per round trip and higher gain saturation. In this case one or more cylindrical mirrors may be used. The cavity mode can be designed such that it passes the pumped spot even more often per round trip if the cavity optical elements are arranged accordingly, resulting in another small-signal gain increase. This is interesting also when the laser medium is used as the gain medium in an optical multi-pass amplifier or regenerative amplifier. The laser medium 4 and its orientation can be chosen such that the cavity mode polarization remains unchanged after passage through the laser medium 4 by avoiding polarization effects due to bire-fringence. For example: Nd:YLF can be oriented such that both a-axes define a plane in which the polarization of the incoming and outgoing cavity mode lie, respectively. This makes Nd:YLF interesting for both high power oscillators and amplifiers in a folded cavity mode configuration. Nd: YAG and Nd:glass have the advantage that they are not birefringent and therefore also suitable for the same configuration.

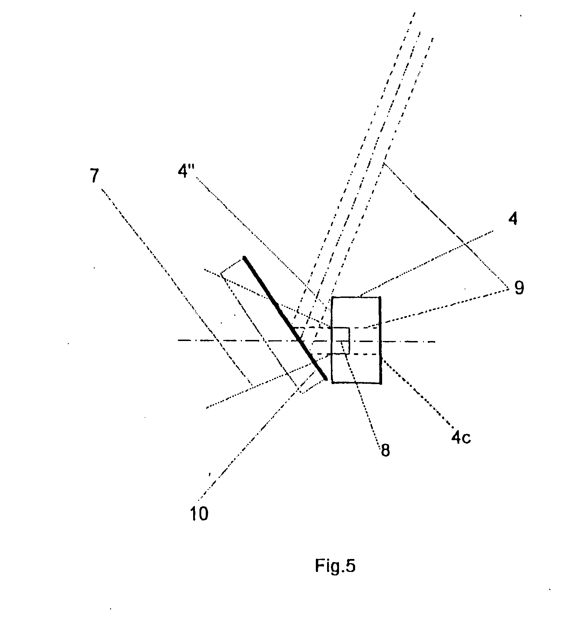

Another approach is possible which has the same advantages as end-pumping, but avoids direct end-pumping. Such an approach is shown in Figure 5, where the pump beam 7 is coupled in through a dichroic cavity fold mirror 10 which is highly reflective for the laser light and highly transmissive for the pump beam 7. The laser medium 4 is pumped from the side opposing the cavity end 4c. For sufficiently short laser media (i.e. only few millimeters long or equal to or even than 1 mm in the direction of the beam) the spatial burning can be used for pulse shortening. The side 4'' from which the laser medium 4 is pumped may be a Brewster face or an anti-reflection-coated flat or wedged side (the wedge can be used to avoid internal reflections). The cavity end side 4c of the laser medium 4 can be coated for high or partial reflection of the cavity mode. If partially reflecting for the laser mode 9, that side may be used as an output coupler. The same coating may be highly reflective for the pump 7, which is particularly useful if not all pump light is absorbed in one pass through the laser medium 4. This configuration using a crystal end face coating with a doubly reflecting coating is particularly useful if the laser medium 4 has non-negligible scattering losses, such as Cr:LiCAF or Cr(4+):YAG for laser oscillation around 800 nm and 1450 nm, respectively. For the case of Cr:LiCAF and Cr:YAG, an absorption length of less than 3mm or 5mm, respectively, can be used to reduce the scattering losses per roundtrip while still having the advantage of an effective (double-bounce) absorption length of 6mm and 10mm, respectively. Likewise, laser mediums which have ground-state absorption can be used in this configuration at reduced absorption losses for the laser mode, resulting in enhanced output performance. For example, this can be used to enhance the output power performance of 3-level or quasi-3-level laser mediums such as Nd:Vanadate and Nd:YAG operated at the 917-nm or 946-nm line, respectively, Yb:glass, Yb:YAG, Er-Yb:glass.

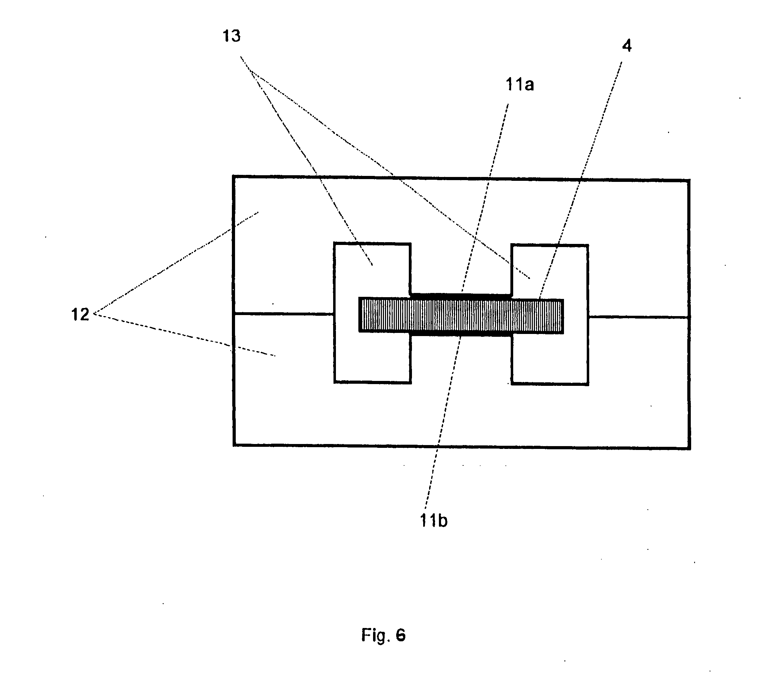

Figure 6 shows a crystal holding technique, which is for instance used to hold a 15-W-pumped Nd:Vanadate laser generating up to 4 W of 7 picosecond pulses at a wavelength of 1064 nm and a repetition rate of 82 MHz whereby a pump concept is used as described here. An output coupler of 4% can be used. A semiconductor saturable absorber mirror was used as the modelocking device. It is to be understood that increasing the pump power will result in increased lacer output power.

Figure 6 shows a cross-sectional view of the the laser medium positioned in between contacting surfaces 11a, 11b at the top and the bottom, respectively. Only a portion of the laser medium top and bottom surface is supported, respectively. Adjacent to this portion regions 13 are provided that comprise air or another material with low thermal conductivity As a contacting medium, thin Indium foil (for example 50 µm thick Indium foil) can be used which reduces mechanical stress due to its soft nature and furthermore ensures a good thermal contact. Other alternatives include the use of thermally conductive glue such as TraBond 2151 or 2158. The heat sink 12 surrounding the laser medium 4 can be made from aluminum, copper or brass or any thermally conductive medium. The fact that the laser medium is supported only on limited contact areas firstly results in a more pronounced one-dimensionality of the heat flow from the elliptical pump spot in the middle of the laser medium 4 to the top and the bottom surfaces, respectively. The resulting reduction in horizontal thermal lensing allows for improved power scaling towards higher powers. Secondly, the mechanical contact areas are restricted to smaller areas, which reduces the danger of cracking the material or causing mechanical stress inside.

*Choice of laser medium:* The laser media 4 that can preferably be used for high power laser output are among, but not limited to, Nd:YAG, Nd:Vanadate, and Nd:YLF. These materials have different gain and thermal lensing properties. Among these Nd:vanadate has the highest stimulated emission cross-section and the shortest upperstate lifetime which makes it suitable for stable modelocking and intracavity nonlinear conversion. Nd:YLF has the widest emission band width and can therefore provide the shortest modelocked pulses, for example 3 ps pulses. In addition, Nd:YLF has the lowest thermal lensing which makes it suitable for high power, i.e. >5 Watt output using the schemes of this invention. All of these materials may be used for high laser power performance up to 10 Watts or multiple 10 Watts. A man skilled in the art can optimize the pump beam spot inside the laser medium and the laser mode, aiming at optimized mode matching, results in fundamental mode operation at these power levels. Further materials that can be used in the configuration of this invention include Cr:LiSAF, Cr:LiCAF, Cr:LiSGAF, Cr:forsterite, Cr(4+):YAG, Nd:glass, Yb:glass, Yb:YAG, Er:Yb:glass, Nd:vanadate and Nd:YAG operated at the 900-nm and 1300-nm lines, respectively. Furthermore, dye laser media can be provided as laser media.

The Nd:YLF is particularly suitable for scaling to higher powers and higher peak powers due to its broader emission band (compared to Nd:YAG and Nd:vanadate), its reduced thermal lensing and thermal birefringence effects. Its fragility can be addressed by choosing a sufficiently long absorption length of >2mm. The high intensity pump described here results in sufficiently high gain saturation required for stable modelocking above the modelocked Q-switching threshold, following the rules of C. Hönninger, et al., in "Q-switching stability limits of continuous-wave passive mode locking", Journal of Optical Society of America B, Vol. 16, No. 1, . 46ff.

*Intracavity and extracavity frequency conversion:* Frequency conversion can be used to generate other wavelengths from a fundamental wavelength, such as 1064 nm in the case of Nd:vanadate and Nd:YAG, or 1053 nm or 1046 nm in the case of Nd:YLF as the laser medium. Frequency conversion systems have been shown to also generate the colors red, green, and blue from such an infrared picosecond pulse source by using optical parametric oscillators, optical parametric amplifiers, or optical parametric generation. These colors, red, green,and blue, can be used for example in laser projection display applications and for entertainment purposes. Frequency conversion to the ultra violet and to the visible wavelength range results in applications in various fields of research and sciences, such as fluorescence measurements, spectroscopy and confocal microscopy. Frequency conversion to the mid-infrared wavelength range can also be accomplished by employing of optical parametric oscillators and is useful for many applications such as gas sensing and molecular spectroscopy. The laser lines around 900 nm and 1300 nm of Nd:Vanadate (917 nm, 1340 nm), Nd:YAG (946 nm), and Nd:YLF, respectively may also be used as the fundamental wavelength to be converted to other wavelengths. For example, the Nd:Vanadate can be doubled to 457 nm, both in an intracavity or extracavity second harmonic generation scheme.

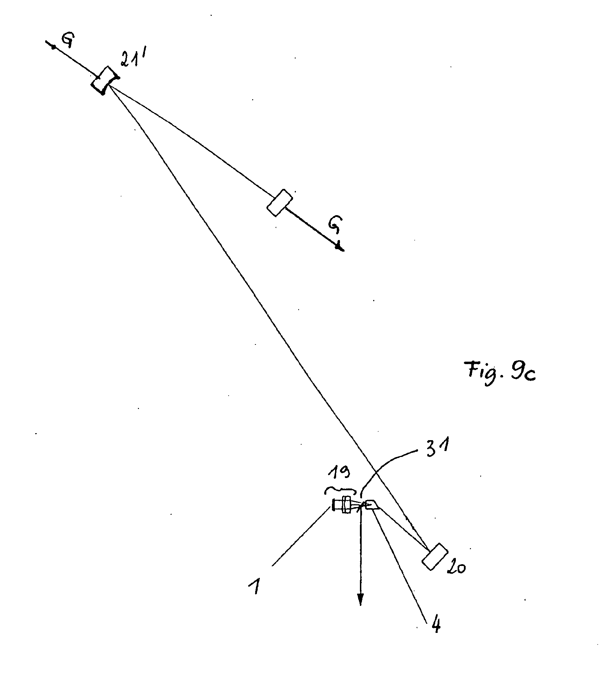

Intracavity nonlinear conversion can be obtained by placing a nonlinear optical material 30 (according to Fig.9c) inside the laser cavity. For example, LBO is known as such a material well suited for intracavity second harmonic generation from the infrared fundamental wavelength to the second harmonic in the visible green (arrows G in Fig.9c). The frequency conversion that can be achieved in such a laser cavity, however, is not limited to the second harmonic generation but may include third and fourth harmonic generation, optical parametric oscillation, optical parametric amplification, and optical parametric generation. The stability of the frequency converted output is also dependent on the degree of laser gain saturation inside the laser medium. Therefore, the scheme described here may be used for stable operation of intracavity frequency conversion. The cavity optics may have to be adapted and calculated for a suitable cavity mode radius at the nonlinear optical medium such that sufficient nonlinear optical conversion is achieved. As an example, in a continous-wave, 1064-nm, intracavity doubled Nd:Vanadate laser (Fig.9c, laser medium 4) using antireflection-coated (at 1064nm) LBO as the nonlinear optical material (Fig.9c, nonlinear optical material 30), the laser mode radius at mm LBO crystal could be chosen to be 50 µm as a starting point. Optimization will be reached by systematically increasing or decreasing the laser mode radius at the LBO material. Different LBO material lengths will enhance the output further.

The high peak power modelocked output of a laser as described here can be used for external, i.e. extracavity, frequency conversion. Second harmonic generation is accomplished by using a nonlinear optical crystal with known appropriate cut for phase matching at the fundamental and the doubled optical frequency, respectively. Well known materials for this purpose are KTP and its isomorphes, BBO, KNbO3, LBO, LiNbO3, periodically poled LiNbO3, periodically poled KTP and its isomorphes. A laser source with a peak power of 7 kW, such as the one described here, can be converted to the second harmonic with high efficiencies in KTP, provided that phase matching is obtained and the KTP crystal length is optimized according to the rules well known in nonlinear optics. Third harmonic conversion can be obtained by frequency mixing the fundamental and the second harmonic light in another nonlinear optical crystal suitable for third harmonic generation, such as LBO or BBO. Fourth harmonic generation can be obtained by applying the second harmonic generation process to the second harmonic output, for example using BBO to double the frequency of the frequency doubled Nd:vanadate laser. Due to the high peak power of such a picosecond laser system, other nonlinear optical conversion schemes well known in nonlinear optics may be used to generate other frequencies, such as sum frequency generation, difference frequency generation, third harmonic generation, fourth harmonic generation, optical parametric oscillation, optical parametric amplification, optical parametric generation.

Enhanced nonlinear-optical conversion with picosecond pulses can be obtained if the nonlinear-optical material is configured in an etalon-like configuration for resonating each picosecond pulse and thereby enhancing the peak power. For this purpose, the resonator will have to be shorter than the physical length of an optical picosecond pulse.

When the high power picosecond laser is used to pump an optical parametric oscillator cavity, stable synchronisation of both the pump laser cavity and the optical parametric cavity can be obtained, largely independent of thermal drift, by putting both cavities on the same base 28 (Fig.1a), for example an aluminium platform. Expansion of the platform, which results in a longer cavity of the picosecond laser, will then give rise to equivalent lengthening of the optical parametric oscillator cavity, thereby keeping both cavities synchronized.

*Modelocking mechanisms*: The modelocking can be obtained by using a modelocking apparatus inside the laser cavity. Such a modelocking apparatus can be a semiconductor saturable absorber or a multiple quantum well device. Any optical scheme that acts as a saturable absorber can be used as well. The modelocking dynamics using semiconductor saturable absorbers is dependent on the pulse energy density both on the saturable absorber and inside the laser medium, as well as on the saturation parameters of the saturable absorber and the laser medium. While minimizing the pulse energy density on the saturable absorber, aimed at longer term operation and lower degradation rates, stable modelocking remains, provided that the pulse energy density inside the laser medium is increased. With the scheme according to this invention, the pulse energy density inside the laser medium is already made considerably higher than in most continuous-wave diode-pumped solid state Nd:YAG or Nd:Vanadate lasers. Therefore, the scheme is well suited for long term and stable mode locking operation using a semiconductor saturable absorber.

As an alternatative modelocking mechanism, a nonlinear mirror modelocking technique can be used. Such a mechanism is described, for example, in patent US4914658: Modelocked laser, Stankov, et al.

Q-switching can be obtained by incorporating an optical switching device into the laser cavity.

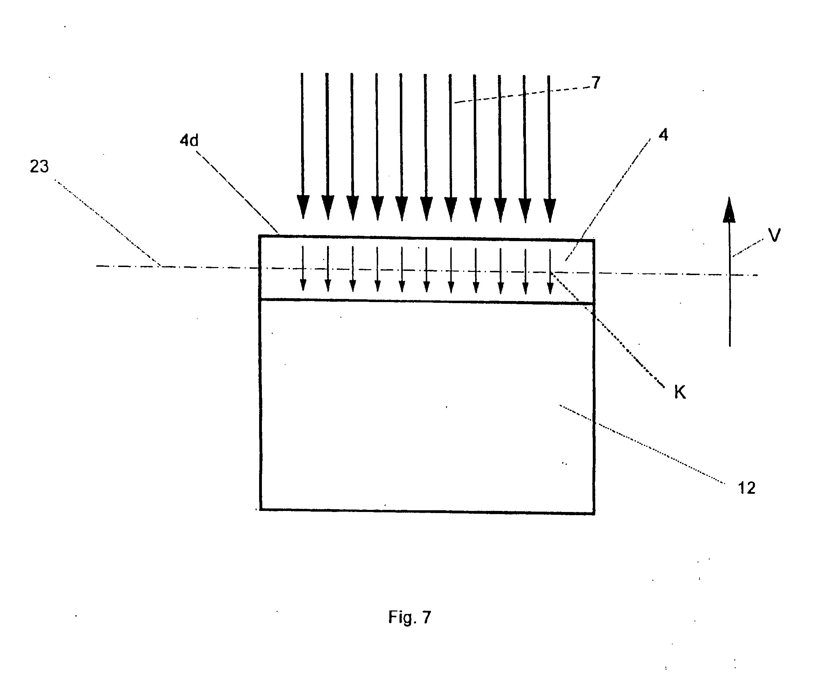

*Transversely pumped, transversely cooled small laser medium laser:* An embodiment according to the invention comprises a transversely pumped, transversely cooled, thin laser medium 4 configuration for high power diode-pumped laser operation. A schematic is depicted in Figure 7. The laser medium 4 is bonded to a heat sink 12 on one side (bottom side in Figure 7). The bonding can be done by a thin indium foil and applying pressure until the medium sticks to it. As an alternative, thin layers of glue may be used, such as for example thermally conductive glue as mentioned above. The laser diode pump beam 7 is incident onto the top side 4d of the laser medium 4 and is, at least partially, absorbed in the laser medium. A double or multiple pump light bounce configuration may be used for increased absorption and more homogeneous light absorption in the laser medium. In this case, the bottom surface of the laser medium 4 is coated for reflection of the pump light. If a homogeneous pump illumination across the laser medium top surface 4d is achieved, the heat flow will be substantially one-dimensional, as indicated in Figure 7 by the arrows K. If further the laser pump beam is substantially homogeneous throughout the laser medium volume, the heat flow will result in a substantially parabolic temperature increase along the vertical dimension V through the laser medium 4. Such a parabolic vertical temperature curve results in a parabolic and therefore substantially aberration-free vertical thermal lens, which has great advantages for the power scaling towards higher powers. A mounting and pumping concept similar to the one previously called the thin disc laser" (A. Giessen, Stuttgart) may be used. The thin disc laser by A. Giessen achieves high pump densities in a thin disc of Nd:Vanadate or Yb:YAG, for example. The difference to that concept is that according to the invention the laser mode is operated transversely to the heat flow rather than parallel to the vertical dimension. If a (vertically) very thin laser medium is used, this results in an even smaller laser mode cross-section and therefore in higher small signal gain compared to the previous thin disc setup. The higher small signal gain can be used to build around this gain medium any kind of modelocking device or frequency conversion device as described throughout this invention. For example, stably modelocked lasers can be built using semiconductor saturable absorber mirrors or stably intracavity-converted continuous-wave lasers.

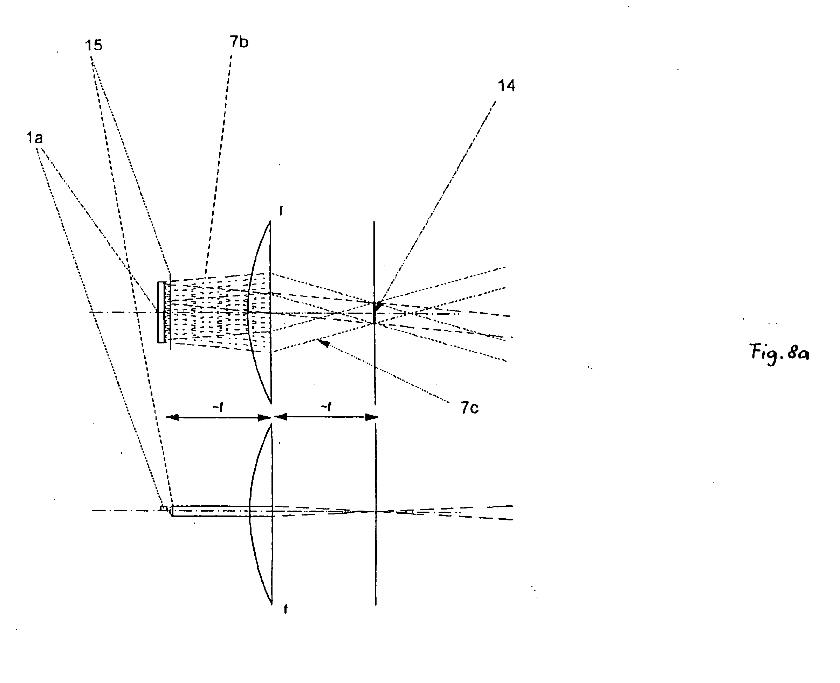

Figure 8a shows a laser diode imaging setup from the top and from the side which images the diode beam 7 from a diode array 1a into a substantially smooth spot 14. When a laser medium 4 is positioned at or close to the smooth spot obtained from such an imaging apparatus, the temperature profile resulting from absorbed power is also smooth, making fundamental mode operation easier and more efficient.

The diode laser array 1a according to Figure 8a may be a 5 mm wide array of 13 emitters placed on a single chip (DILAS GmbH, Mainz, Germany), each diode emitter being 200 µm wide and positioned at a 400 pitch. In the vertical axis, the emitting area is ca. 1 µm high. The vertical position of each diode emitter does not deviate by more than +/- 0.5 µm from the horizontal plane, corresponding to a diode array "smile" of less than +/- 0.5 µm. This high aspect ratio diode light propagates as shown in Figure 8a. In the horizontal plane (see top view) the diode light of each emitter propagates at a divergence of ca. +/-5°. In the vertical plane (see side view), the divergence can be as high as ca. +/- 45°. Therefore, a short focal length cylindrical micro lens 15 with a focal length of ca. 0.2-1 mm is positioned at a distance equal to the focal length away from the diode array 1a, and collimates the vertical axis of the diode light 7a. A lens 16 with a focal length f is then placed ca. one focal length f away from the diode laser array 1. The lens 16 f then collimates each beam 7b in the horizontal plane and directs them to substantially the same spot (top view), and focuses the diode light in the vertical plane (side view). This results in a high aspect ratio diode laser beam 7c, where each diode array emitter is imaged substantially into the same (high aspect ratio) spot 14, resulting in a smooth intensity distribution. The spot 14 is smooth in a sense that even if some of the emitters of the diode array 1a die or degrade, the spot 14 will not substantially change its horizontal intensity pattern, because all emitters are imaged into the same spot 14. Both calculations and experiments show a high aspect ratio spot 14 with a diameter of 1-2 mm in the horizontal plane and 50-100 um in the vertical plane.

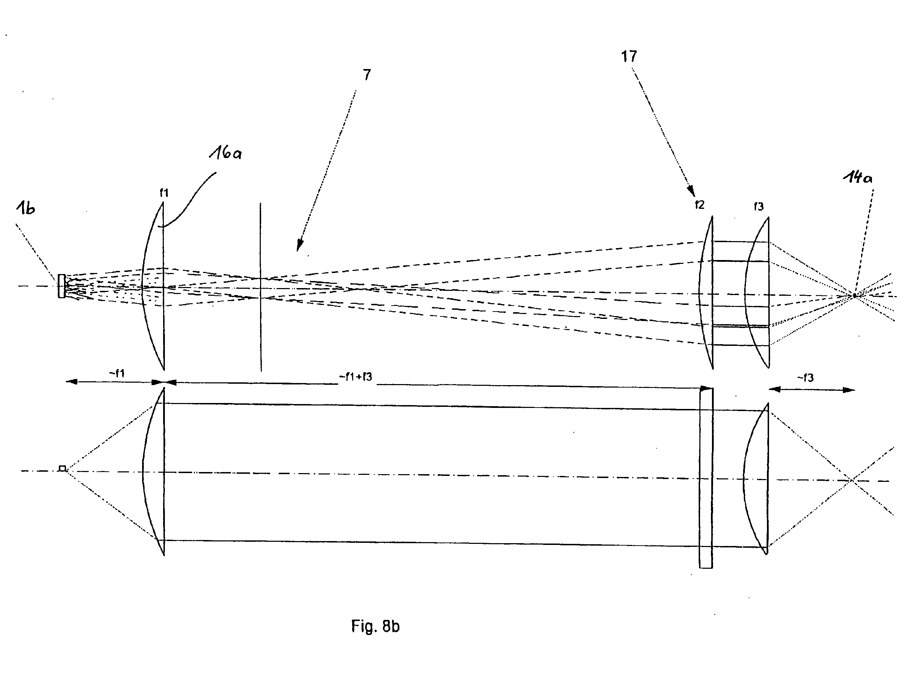

An alternative imaging setup is shown in Figure 8b from the top and from the side. Here the diode laser array 1b consists of 5 emitters, positioned at 0.2 mm pitch, each emitting from 100 µm (horizontal) x 1 µm (vertical dimension). A lens 16a with a focal length of f1~4.5 mm is positioned ca. 4.5 mm away from the diode array 16a and collimates the vertical axis as well as the horizontal plane. Both directions do not significantly diverge over the following distance of ca. 24.5 mm, to a horizontal cylindrical lens 17 witch a focal length of f₂ = 20 mm (in the horizontal plane only). A final focusing lens 18 with f₃=4.5 mm generates a spot 14a with strong ellipticity and a calculated diameter of -200 µm x 1 µm, assuming abberation-free imaging. Different lenses will result in different aspect ratios and spot diameters, and may be adapted to the needs of diode pumping of solid state lasers, for example following the guide lines given in D.

Kopf et al, "1.1-W cw Cr:LiSAF laser pumped by a 1-cm diode array", Optics Letters, Jan. 15, 1997, Vol. 22, No. 2.

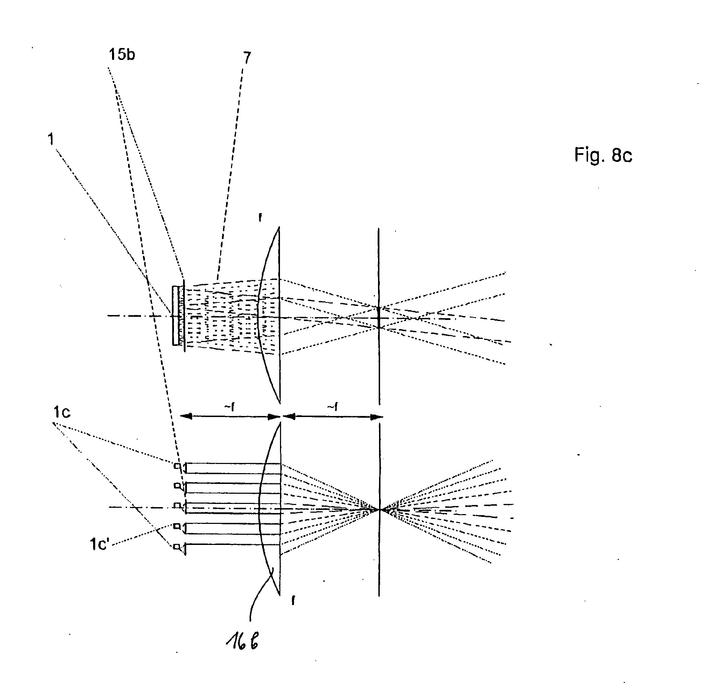

Figure 8c shows the principle of a third, alternative setup. Here a stack of 5 diode laser arrays 1c is used, each of which array 1c' is positioned on top of each other at a vertical pitch of ca. 1.75 mm. Each diode laser array 1c' is 1-cm wide and consists of 26 emitters, which are 200 µm wide and positioned at a 0.4 mm pitch (13 emitters shown in Figure 8c). Each array 1c' has a cylindrical micro lens 15b with a focal length of ca. 0.3 mm attached to itself, resulting in vertically collimated beams. Each diode laser array 1c' is imaged similar to the imaging shown in Figure 8a, using a lens 16b of focal length f=25 mm. In sum, all emitters of each diode laser array 1c' are imaged to substantially the same high aspect ratio spot 14b at a distance f away from the focal lens 16b f, resulting in a smooth high power, high aspect ratio pump spot 14b suitable for diode pumping. The laser diode stack 1c' generated up to 40 W per diode array 1c' and therefore a total of up to 200 W of optical power contained within a spot 14b of ca. 2.5 mm x 0.2 mm, corresponding to an intensity of > 10 kW/cm^2.

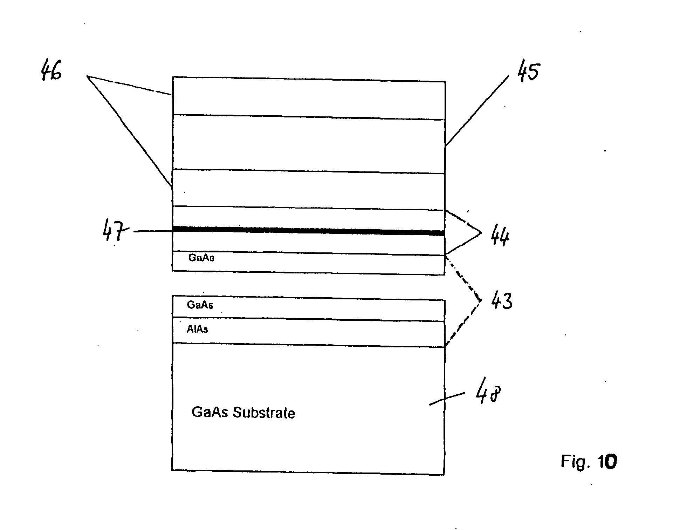

Figure 9a shows a complete laser setup, with a pump arrangement 19 as described above, and a laser cavity 4,20,21,22 which has a high aspect ratio fundamental beam cross-section substantially matched to the high aspect ratio diode pump beam at the laser medium. As the laser medium 4 0.4%-Neodymium-doped Yttrium-Vanadate (Nd:YVO4) with a coating on one side and a Brewster face at the other side may be used. The coated side has for instance a reflectivity of R=95% for the laser wavelength of 1064 nm and a high transmission T>90% for the pump light at a wavelength of 808 nm. A dichroic mirror 31 placed between the diode laser focusing lens and the laser medium entrance face separates the 1064 nm laser output from the incoming 808 nm pump light. A first cavity mirror 20 has a vertical (i.e. perpendicular to plane of drawing) curvature with a radius of 65 mm, and is highly reflective for 1064 nm. A second cavity mirror 21 has a spherical radius of curvature of 200 mm. The distance betweeN the two mirrors is about 280 mm. As optical component 22 a semiconductor saturable absorber component is used as shown in Figure 10. It is positioned as a distance of about 100 mm form the second cavity mirror. This component is responsible for modelocking and generates a train of picosecond pulses at an average output power of ca. 3 W average power and a pulse repetition rate of ca. 360 MHz. Therefore, this laser setup is suitable for building high repetition rate (>250 MHz) ultrashort pulse lasers with multiple Watt output power.

Figure 10 shows an example of such a semiconductor saturable absorber, representing the layers along the surface normal to its surface. Firstly, 30 pairs of layers of alternating gallium arsenide (GaAs) and aluminium arsenide (AlAs) layers 43 each with an optical thickness corresponding to a quarter wavelength are applied onto a gallium arsenide (GaAs) substrate 48. This can be achieved with the help of the growth process of the molecular beam epitaxy (MBE). However, other epitaxy processes known and usual in this field are also suitable. The GaAs/AlAs pairs of layers are transparent for the laser wavelength of 1064 nm and result, in the example depicted in Figure 10, in a Bragg mirrorlike coating structure with a high reflection factor close to 100% with a wavelength of 1064 nm if the thickness of GaAs is selected at approx. 72.3 nm and that of AlAs at approx. 88 nm, each corresponding to about an optical quarter wavelength. Then a further GaAs layer 44 integrating an approx. 10 nm thin absorber layer of the material indium gallium arsenide (InGaAs) is assembled onto this standard GaAs/AlAs Bragg mirror structure. The optical total thickness of this GaAs layer with integrated absorber layer 47 corresponds to half a wavelength, that is the physical film thickness is approx. 145 nm. The indium content of the absorber layer 47 is determined so that an absorption is obtained at the laser wavelength of 1064 nm, that is the band-edge is approx. 1064 nm or a few 10 nm higher than the laser wavelength, e.g. at 1064-1084 nm. This corresponds to an indium content of about 25 percent. With higher intensity and pulse energy density, a saturation of the absorption of this absorber layer 47 occurs, i.e. it is lower. In the case of particularly thin layers of less than 20 nm thickness, by additionally finely adjusting the indium content the exciton peak near the band edge, generated by the exciton absorption behaviour of thin layers to be quantizised, can be adjusted exactly to the laser wavelength, resulting again in an even more pronounced saturable absorption at this wavelength. Finally, another three dielectric pairs of layers transparent for the layer wavelength are applied, beginning with that layer 45 having a higher index of refraction n=2.02 and continuing with that layer 46 having a lower index of refraction of 1.449 at a wavelength of 1064 nm. The process of electron beam coating widespread in the optical coating field is suitable to achieve this. Other optical coating processes, such as for example ion beam sputtering, are also suitable and can have the advantage of resulting in lower losses. As optical layer materials, those with an index of refraction of 1.449 and 2.02 at a wavelength of 1064 nm were used. However, a large number of other materials can be used as long as adhesion to GaAs and transparency at the laser wavelength are ensured.

By expanding the laser resonator of Figure 9a while keeping the mode cross-section at the laser medium approximately constant, it is possible to build a 80 MHz modelocked laser resonator using a semiconductor saturable absorber mirror. The laser will generate up to 6 W of modelocked output power at an absorbed pump power of 15 W. The modelocking threshold measured is at an output power as low as 0.82 W. Throughout the modelocked operating range, the pulse energy density incident on the semiconductor saturable absorber mirror is not higher than 10 times the saturation pulse energy of the optical component, which is sufficiently low to avoid optical damage or long-term degradation effects. The pulse energy density of the saturable absorber layer is as low as 0.5 mJ/cm² or even less. The laser concept described here therefore allows to build simple, high-power and long-term stable ultrashort pulse lasers.

As an example: A 0.3 %-doped Nd:Vanadate crystal, mounted according to Fig. 6 and with a cross-section of ca. 4 mm x 0.8 mm, was pumped by a laser diode array emitting 40 W and being imaged into that crystal accoring to Fig. 8a using a cylindrical micro-lens with a 0.4-mm focal length and a lens doublet f with a focal length of approximately 15 mm. A laser cavity similar to that of Fig. 9a was arranged such that at the laser medium a lasing mode of approximately 1.3 mm x 0.07 mm was obtained, showing an aspect ratio close to 20:1. The laser cavity end was a semiconductor saturable absorber mirror generating stable picosecond modelocked pulses with an average output power >8W. The laser was operating in the fundamental mode. This example shows that this invention can be used for Nb:Vanadate laser media operating at high power without being prone to fracture.

As an alternative setup, Figure 9b shows a similar laser setup where a cylindrical lens 20a is incorporated in the laser cavity instead of the first cavity mirror 20. Such a cylindrical lens may also be provided instead of the second cavity mirror 21. The lens can be anti-reflection coated at the laser wavelength for minimized reflection losses. The cylindrical lens 20a can also be inserted at Brewster's angle, which can minimize insertion losses when the lens is uncoated, for example. A man skilled in the art will choose additional optical elements according to different resonator lengths or different laser mode sizes.

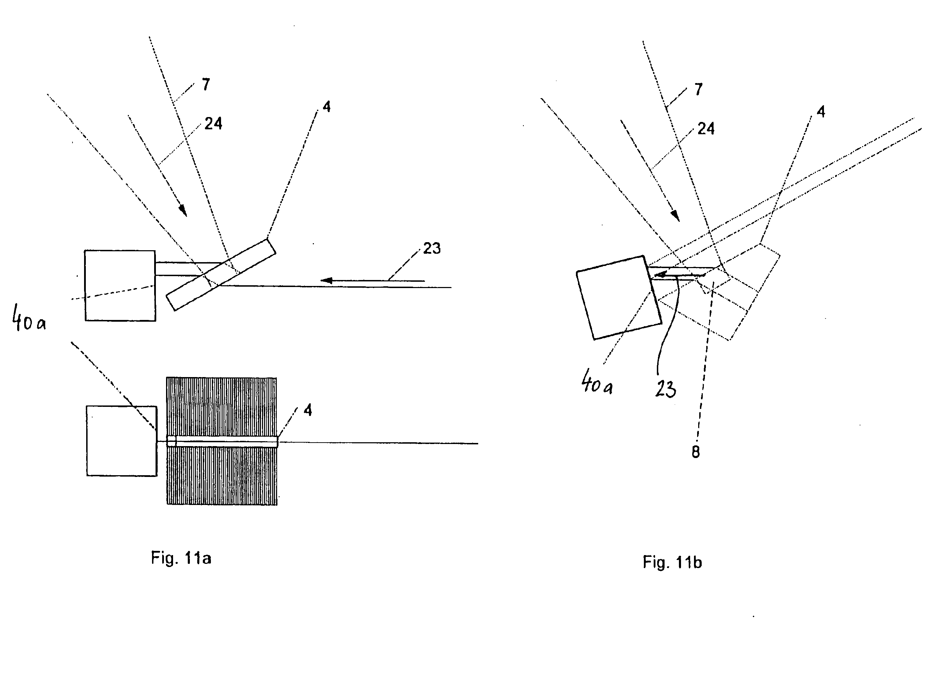

Figure 11a shows a diode pumping setup from the top and from the side where the elliptical pump spot 14 does not enter the medium 4 along the same optical axis 24 as the laser 4 mode optical axis 23, in contrast to the previously described setups. The laser medium is inserted at Brewster's angle with respect to the laser mode optical axis 23. The pump light 7, however, enters the laser medium from the side, approximately perpendicular to the laser medium Brewster face. This setup can have a number of advantages: The laser light does not have to pass through one of the laser cavity mirrors (as 40a) and therefore does not impose potentially difficult requirements on that coating, which would usually have to be optimized for high transmission at the pump light. This can simplify the constraints on the coating, in particular when the pump laser wavelength is close to the laser wavelength, such as for example when pumping Ytterbium-doped YAG at 940 nm and operating the laser cavity at 1030 nm. With regard to the other parts, the cavity can still be substantially the same as that of Figure 9, which results in a high aspect ratio fundamental beam at the laser medium. The laser diode pump beam can then also be a high aspect ratio beam at the laser medium when using, for example, one of the diode imaging setups shown here. With such a setup, for instance, a 940 nm diode pumped Yb:YAG laser may be operated producing >2.3 W output power at an absorbed pump power of ~25 W.

Fig.11b shows an alternative diode pumping setup from the top, where, similar to the setup shown in Fig.11a, the optical axis of the elliptical pump spot generating beam 7 and the axis of the laser mode do not coincide. Here the laser crystal is coated with a reflective coating for the laser wavelength at the back side, thereby operating as laser resonator end. For laser crystals sufficiently short along the axis of the laser mode, this results in a pump absorption region 8 being close to the resonator end, which can be exploited for spatial hole burning, thereby obtaining shorter optical pulses.

*Beam axis adjustment for the light beam emerging from the diode array:* The imaging optics of known laser means as for example described in "1.1-W cw Cr:LiSAF laser pumped by a 1-cm diode array", D. Kopf, U. Keller, M.A. Emanuel, R.J. Beach and J.A. Skidmore; optics Letters, Jan. 15, 1997, Vol. 22, No. 2 comprise several optical elements, which have to be mounted at precise positions along the path of the light beam from the diode array to the laser medium. These optics extend over long distance and do need a big space. The laser diode usually emits from an emitting area which is 1 µm (micrometer) in vertical direction and typically µm up to 10'000 µm in horizontal direction. Laser diodes with an emitting area which is 3 µm wide typically emit laser light which is diffraction limited and carries approximately 50-300 mW power. Laser diodes with a 10'000 µm wide emitting area on a single chip emit laser light with output powers in the range of 20-60 W. The laser light is in the vertical dimension nearly diffraction limited but is not diffraction limited in the horizontal dimension (approximately 2000 times higher). The high power diode "bars" usually consist of an array of diodes located on the same chip: For example, a 40 W laser diode may consist of an array of 20 diodes each with a 200 µm wide stripe and a center-to-center spacing of 400 µm. In this case, the fill factor is 50%, corresponding to the active area divided by the total area, which also includes the inactive spacer area in between two adjacent diodes on the same chip or "bar".

The light from the laser diode is typically strongly diverging in the vertical axis ("fast" axis) at an angle of approximately +/- 30°, for example. Therefore, the first optics component in the imaging optics is a fast-axis collimation lens, preferably a cylindrical lens, which collects the light in the vertical dimension. This lens is normally attached to the same mount on which also the laser diode chip ("bar") is mounted. In some cases, it is not necessary to use a cylindrical lens, especially as long as the emitting area aspect ratio is not much higher than 500 µm: 1 µm (horizontal dimension : vertical dimension). Generally it is preferable to use high numerical aperture (NA = 0.5 approximately) lenses which are capable of collecting all or substantially all power in the vertical dimension, where the divergence is generally much higher than in the other dimension.

One issue of importance is the so-called "smile" of a laser diode array. The smile relates to a bending of the laser diode array in the vertical dimension. This bending is typically in the order of one or a few microns across a 5'000 µm or 10'000 µm diode bar. The result is that the discrete emitting areas on the same chip have different vertical positions with respect to the cylindrical fast-axis collimation (FAC) lens. For a change in vertical position in the order of 1 µm across the bar, the beam angle after the collimation lens is changed by 1/200 = 5 milli radians. This is approximately equal to the full-angle divergence of the diffraction-limited beam exiting the FAC lens, which is the divergence that would be expected with no smile and no aberrations from the FAC lens. Therefore, any smile greater than 1µm across the bar would be the predominant reason for increased beam divergence and, correspondingly, reduced beam quality after the FAC lens, and is therefore to be avoided as much as possible.

Likewise, any misalignment of the FAC lens on the order of 1 µm in the vertical dimension results in the same angle deviation. Therefore, the FAC lens would have to be mounted with a tolerance of less than 1 µm. This is difficult and/or costly. To reduce this cost and to make the mounting procedure of the FAC lens to the diode mount less critical, any beam angle tolerances, respectively orientation tolerance of the beam axis, after the FAC lens in the order of +/- 10 milli radians in the vertical dimension are acceptable. This leaves the FAC mounting procedure with an acceptable tolerance of +/- 2 µm for the vertical position.

A preferred configuration should enable a precisely oriented diode array beam by simple optics. The described mounting procedure tolerance should not cause an unacceptable deviation of the diode array beam form its precise orientation.

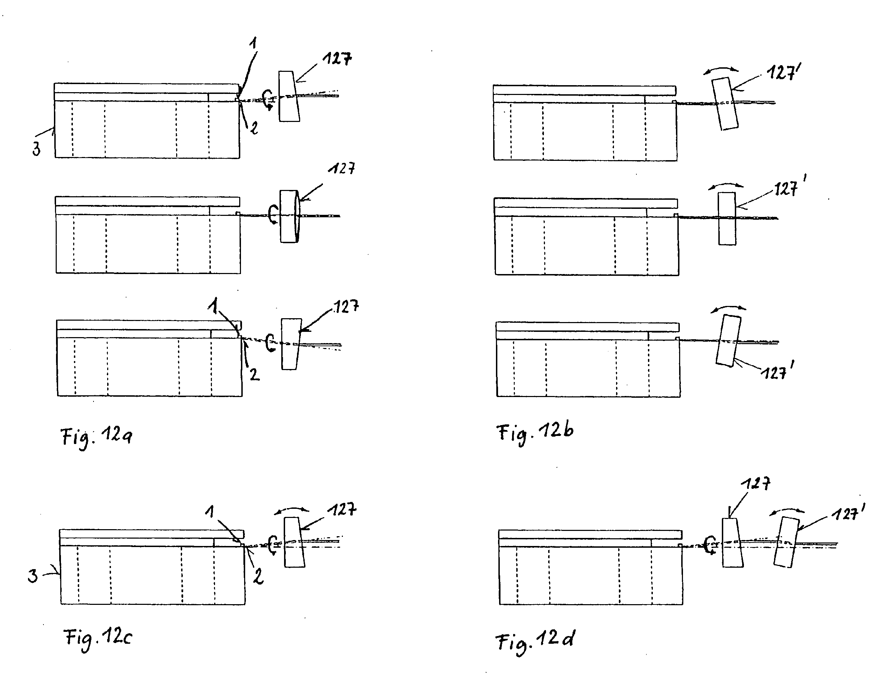

Figures 12a, 12b, 12c and 12d show sketches of possible configurations. In a particular embodiment a laser diode array 1 with a total width of 5'000 µm and an emitted power of 15 W at a wavelength of 808 nm and a cylindrical collimation lens 2 with a focal length of approximately 200 µm in the vertical dimension are used. The diode array 1 and preferably also the collimation lens 2 are fixed to the diode array mount 3. Therefore the mentioned orientation tolerance of the beam axis is a tolerance of the beam axis relative to the diode array mount 3. In order to compensate for any beam angle deviation within the range of approximately +/- 10 milli radians, a wedged window is used. A wedge in the order of 0.5° (= 8.7 milli radians) results in a maximum angle correction of the refractive index of the window material times the wedge angle, which results in an angle correction of up to 1.5 * 8.7 milli radians = 13 milli radians. Upon rotation of the wedged window through the range of 180° around its normal axis, the resulting vertical angle correction correspondingly changes within the range of ±13 milli radians and can therefore compensate for any vertical angle deviation the beam may have after exiting the FAC lens 2. This adjusting is used to post-compensate the vertical angle deviation in a simple and insensitive way according to the illustration in figure 12a, where the angles (wedge and beam angles) are exaggerated by a factor of 10 for illustration purposes.

The vertical angle compensation, respectively adjusting the beam axis into a horizontal plane, results in a change in angle in the horizontal plane. However, this does not result in a significant relative change of the horizontal angle because the divergence of the laser diode light in the horizontal plane is on the order of +/- 6° (= ca. +/-100 milli radians). Therefore, , a change in angle in the horizontal plane can be neglected.

The vertical beam offset which comes along with the vertical angle compensation can be compensated for by another rotation of the same or an additional window with a rotation axis aslant to the beam axis. This is shown in figures 12b, 12c, 12d. Fig. 12b shows a parallel window 127' with parallel surfaces. Assuming a window thickness of 2 mm and a refractive index of 1.5, a rotation by an angle of 1° results in a vertical beam offset, respectively shift, of approximately 23 microns, which is much less than the vertical beam width of 200 µm in our example. A parallel window 127' with a smaller thickness would have to be rotated by a higher angel to cause the same vertical beam offset. Therefore the adjusting with thin parallel windows 127' is not delicate at all.

According to Fig. 12c the wedged window 127 can be rotated around two axes which allows adjusting of both the vertical beam angle and the vertical beam offset in an insensitive way. Fig. 12d shows an alternative, where two separate windows in combination can do the same job. The wedged window 127 is used to compensate for the beam angle deviation and the parallel window 127' is used to compensate for the beam offset.

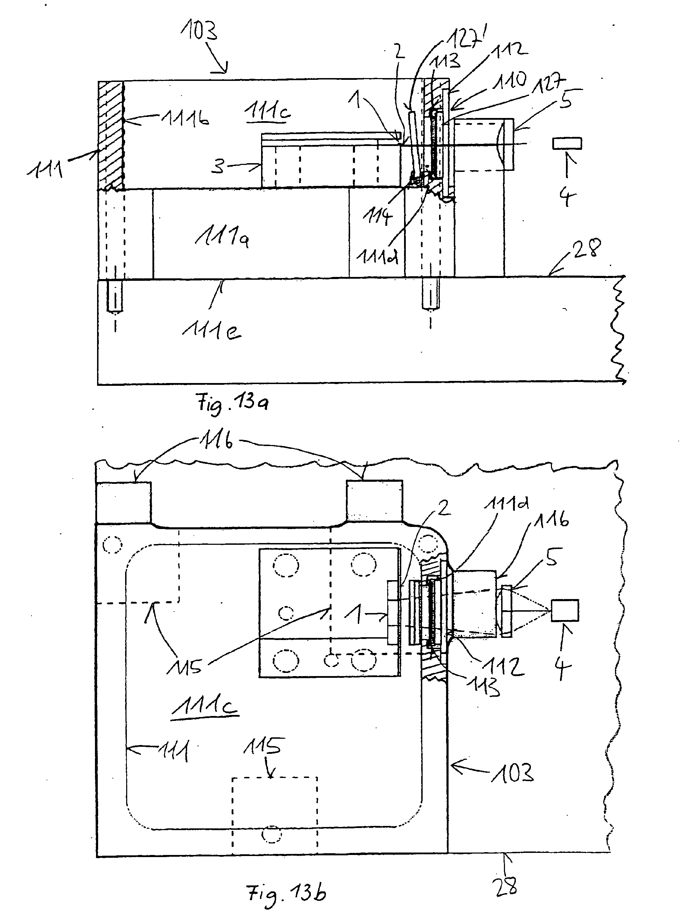

At least one wedged window 127 is part of an adjusting means which enables adjusting the light beam, respectively its axis, to a defined plane or axis relative to the diode array mount 3. According to Figs. 13a and 13b an embodiment of a diode array pumping device 103 comprises the diode array mount 3, the diode array 1, the collimation lens 2 and adjusting means 110. The adjusting means 110 includes at least one wedged window 127. In the shown embodiment the adjusting means 110 includes a parallel window 127' as well. The windows 127 and 127' are arranged at an opening 111d through a side wall 111b of a cuplike pumping device mounting frame 111. The mounting frame 111 has a bottom plate 111a and side walls 111b enclosing an inner space 111c, which can be closed by a cover plate. The diode array mount 3 is arranged within the inner space 111c close to a side wall 111b in such a way that the light beam of the diode array 1 is passing through the opening 111d. The edge of the opening 111d has preferably at least two steps. The wedged window 127 is arranged in-between an elastic ring 113 and a holding ring 112, wherein the elastic ring 113 and the wedged window 127 are pressed by the holding ring 112 towards a first step of the opening 111d. For adjusting the axis of the diode light beam to a horizontal plane, respectively to a plane parallel to a lower contact plane 111e of the mounting frame 111, the wedged window 127 is turned around its normal axis. The holding ring 112 is fixed to a second step of the opening 111d. The parallel window 127' is arranged in-between the diode array 1 and the wedged window 127. After tilting of the parallel window 127' until the vertical offset of the beam axis is compensated, the parallel window 127' is fixed to the mounting frame 111. Since the parallel window 127' is light and the tilting angle does not have to be very accurate, the fixing can be done with a spot of adhesive 114. After adjusting the axis of the diode light beam into a plane at a defined distance and parallel to the contact plane 111e, the diode array pumping device 103 can be fixed to the laser system base 28.

The adjusting means 110 is very simple and enables a precise orientation of the diode array beam by a an easy adjusting step at the production of the diode array pumping device 103. The diode array pumping device 103 and the adjusting means 110 is new and inventive independent of the other scopes of this invention.

The optics on the diode array pumping device 103 is designed such that the connecting of the pumping device mounting frame 111 to the laser system base 28 is insensitive to angle and position deviation that may occur from one diode array pumping device 103 to the other diode array pumping device 103 upon replacement. Typical repositioning tolerances of the diode array pumping device 103 on the laser system base 28 are in the order of a few microns, corresponding to the achievable flatness in the order of a few microns for machined surfaces. This results in well acceptable changes in beam direction and offset at the laser medium and therefore does not significantly affect the laser system performance.

For the purpose of focusing the diode laser light into the laser medium, an f=8mm focal length lens 5 with high NA and good imaging quality, for example the item number C240TM-B from Thorlabs, Inc., can be used. This lens 5 is preferably no longer part of the diode array pumping device 103, but is attached to the laser system base 28 where also the laser medium 4 is positioned.

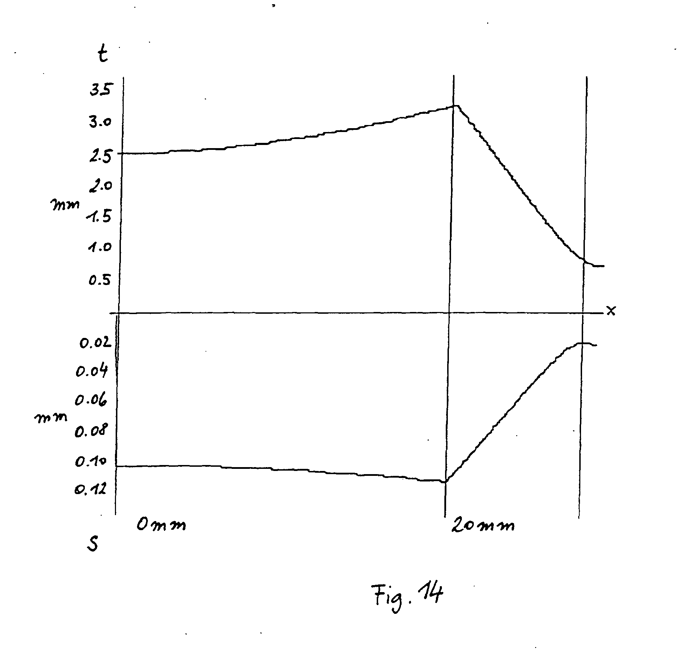

The focusing optics described here generates a bright and highly asymmetric pump beam inside the laser medium, as can be seen from the beam propagation plot in Figure 14: The x-axis shows the beam propagation from diode array 1 (left) to the laser medium 4 (right), where the focal lens 5 is positioned at x=20mm. Assuming no aberrations and no smile, than the calculated focus has a waist of 740µm in the horizontal direction and of 22 µm in the vertical direction and is therefore highly asymmetric and bright. The horizontal respectively vertical direction is shown in the direction of the tangential- (t), respectively sagittal-axis (s). The pump beam obtained from the scheme described here is well suited for building a laser cavity with a vertically squeezed laser mode inside the laser medium. This is described in more detail in D. Kopf, K. J. Weingarten, G. Zhang, M. Moser, A. Prasad, M. A. Emanuel, R. J. Beach, J. A. Skidmore, U. Keller, Invited Paper, "High-average-power diode-pumped femtosecond Cr:LiSAF lasers," Applied Physics B, vol. 65, pp. 235-243, 1997.

At the laser medium, one can assume an acceptable relative tolerance of +/-10% for both the diode laser beam *angle* and *position* with respect to the diode laser beam *divergence* and *width.* Given a half-angle vertical beam divergence of 10 milli radians and a beam waist of 20 microns radius at the laser medium, this corresponds to a desired pump beam reproducibility of +/-1 milli radian in angle and +/-2 microns in position at the laser medium. In a distance of 8 mm (focal length) before the f=8mm focusing lens, any angle deviation results in a position deviation at the laser medium, and vice versa. Therefore, the requested beam angle and position reproducibility at the diode array pumping device 103 exit is calculated to be 8 µm and 0.25 milli radians, respectively. For typical machining accuracies in the order of a few microns this should be easy to accomplish: Given a surface flatness of 5 µm across the diode array pumping device 103 base dimension of approximately 60mm (Figure 13a, 13b), one can achieve a position and angle reproducibility of 5µm and 5µm / 60'000µm = 0.1 milli radian. In order to even enhance this reproducibility, the bottom of the pumping device mounting frame 111 can be machined such that only three defined horizontal positioning areas 115 touch the laser system base 28 in a predetermined way. The horizontal alignment of the pumping device mounting frame 111 with respect to the laser system base 28 is for example accomplished by three distinguished vertical positioning areas 116.

The example given here is not restricted to the given values. For an ordinarily skilled person it would be obvious how to adapt the set-up described here to different focal lengths, dimensions, number and types of optics elements, etc. For example, the fast-axis collimation lens 2, which had a focal length of 200µm in this description, can have a different focal length, too. For this purpose, fast-axis collimation lenses with a focal length in the range from 50µm to 1000µm are common and often used, but the scope of this invention is not restricted to these values. The fast-axis collimation lens 2 does not necessarily have to be mounted on the same mount as the diode bar is mounted on, but may as well be fixed to the pumping device mounting frame 111.

Likewise, the beam path may contain another lens or focusing means, such as for example a second cylindrical lens for shaping the beam in the horizontal plane. The wedged window 127 does not necessarily have to have flat surfaces but can fulfil substantially the same function when its surfaces are curved. Note that, for example, an off-axis spherical or cylindrical lens could be used for basically the same purpose as the wedged window 127, since the front and back surface are also at an angle with respect to each other. As alternative, the wedged window 127 can also be replaced by prism which fulfils still substantially the same function as the wedged window because its surfaces are also at an angle with respect to each other.

The diode array pumping device 103 is a module that can be replaced without affecting the laser performance. Such a user-replaceable diode module would increase the laser life time of diode-pumped lasers because the user can replace the diode module himself and therefore no service personnel is needed. Since typical laser diodes only live for approximately 10'000 hours (mean time to failure), the user-replaceable diode module boosts conveniently the laser system lifetime up to multiple laser diode lives, which is sufficient for industrial laser applications. Likewise, solid state lasers which use less reliable laser diodes, for example high power red diodes with a live time of about 2.000 hours, can still become attractive when using the possibility of easy diode module replacement.

Up to now diode-pumped solid state lasers do not use any concept which aims at easy replacement of the laser diodes. Here, the disadvantage is that only skilled personnel at the laser factory can do the replacement. Other laser manufacturers have focussed on fiber-delivery of the laser diode light from diode modules, which then can easily be replaced by an experienced engineer ("field-replaceable"). However, this approach suffers from loss of brightness and beam quality through the optical fiber, from higher complexity and an increased number of optical elements. Additionally, the field-replaceable diode modules do not yet fulfil the criterion of being user replaceable.

It is therefore an important advantage of the described embodiment with a replaceable diode array pumping device 103, that the laser diode and part of the imaging optics is put on a removable optics basis for quick, simple, and reproducible replacement. The optics on the diode module is designed such that after replacement of that module, both the angle sensitivity and the positioning sensitivity is low enough to make sure that the laser still works. The diode module optics contains at least one piece of optics which allows very easy (i.e. insensitive) adjustments of the output beam characteristics, which makes the diode module assembly procedure insensitive and reproducible.

## Claims

1. A diode-pumped Laser operating in the fundamental mode, with
• a laser means for producing a high aspect ratio pump light beam (7) comprising a diode pumping array and optical means for imaging the pump light beam (7) onto an asymmetrical spot with a smooth intensity profile, and
• a laser medium (4) which is excited by said pump light beam (7),
wherein
- the laser medium (4) is bonded to a heat sink (12) on the bottom side of the laser medium (4),
- the pump light beam (7) is incident onto the top side (4d) of the laser medium (4) and
- the axis of the pump light beam (7) is positioned with respect to the axis (23) of the laser mode in such a way that the laser mode is operated transversely to the heat flow (K) and the diode-pumped laser is transversely pumped and transversely cooled.

2. A diode-pumped Laser as in claim 1, wherein the laser mode is strongly elliptical within the laser medium (4).

3. A diode-pumped Laser as in claim 2, wherein the laser mode has an aspect ratio of >15:1.

4. A diode-pumped Laser as in one of the preceding claims, wherein the pump light beam (7) has an aspect ratio of >15:1.

5. A diode-pumped Laser as in one of the preceding claims, wherein the laser medium (4) is a thin disc laser medium.

6. A diode-pumped Laser as in one of the preceding claims, wherein the pump light beam (7) has a double or multiple bounce configuration.

7. A diode-pumped Laser as in one of the preceding claims, wherein the bottom side of the laser medium (4) is coated for reflection of the pump light beam (7).

8. A diode-pumped Laser as in one of the preceding claims, wherein the laser medium (4) is bonded to the heat sink (12) by indium foil or glue, preferably thermally conductive glue.

9. A diode-pumped Laser as in one of the preceding claims, comprising a modelocking device, preferably a semiconductor saturable absorber mirror or a stably intracavity-converted continuous-wave laser.

10. A diode-pumped Laser as in one of the preceding claims, comprising a frequency conversion device.

## Patentansprüche

1. Im Grundmodus arbeitender, dioden-gepumpter Laser mit
• Lasermitteln zur Erzeugung eines Pumplichtstrahls (7) von hohem Aspektverhältnis, eine Dioden-Pumpanordnung und optische Mittel zur Abbildung des Pumplichtstrahls (7) auf einen asymmetrischen Fleck mit glattem Intensitätsprofil umfassend, und
• einem Lasermedium (4), das durch den Pumplichtstrahl (7) angeregt wird, wobei
- das Lasermedium (4) an eine Wärmesenke (12) an der Unterseite des Lasermediums (4) gebondet ist,
- der Pumplichtstrahl (7) auf die Oberseite (4d) des Lasermediums (4) einfällt und
- die Achse des Pumplichtstrahls (7) bezüglich der Achse (23) des Lasermodus so positioniert ist, dass der Lasermodus transversal zum Wärmefluss (K) betrieben wird und der dioden-gepumpte Laser transversal gepumpt und transversal gekühlt wird.

2. Dioden-gepumpter Laser nach Anspruch 1, **dadurch gekennzeichnet, dass** der Lasermodus innerhalb des Lasermediums (4) stark elliptisch ist.

3. Dioden-gepumpter Laser nach Anspruch 2, **dadurch gekennzeichnet, dass** der Lasermodus ein Aspektverhältnis höher als 15 : 1 besitzt.

4. Dioden-gepumpter Laser nach einem der vorangehenden Ansprüche, **dadurch gekennzeichnet, dass** der Pumplichtstrahl (7) ein Aspektverhältnis höher als 15 : 1 besitzt.

5. Dioden-gepumpter Laser nach einem der vorangehenden Ansprüche, **dadurch gekennzeichnet, dass** das Lasermedium (4) ein Scheibenlasermedium ist.

6. Dioden-gepumpter Laser nach einem der vorangehenden Ansprüche, **dadurch gekennzeichnet, dass** der Pumplichtstrahl (7) eine Zweifach- oder Mehrfachreflexions-Konfiguration besitzt.

7. Dioden-gepumpter Laser nach einem der vorangehenden Ansprüche, **dadurch gekennzeichnet, dass** die Unterseite des Lasermediums (4) für Reflexion des Pumplichtstrahls (7) beschichtet ist.

8. Dioden-gepumpter Laser nach einem der vorangehenden Ansprüche, **dadurch gekennzeichnet, dass** das Lasermedium (4) mit Indiumfolie oder Kleber, bevorzugt einem wärmeleitenden Kleber an die Wärmesenke (12) gebondet ist.

9. Dioden-gepumpter Laser nach einem der vorangehenden Ansprüche mit einer modenkoppelnden Vorrichtung, bevorzugt einem sättigbaren Halbleiter-Absorberspiegel oder einem stabil resonator-intern konvertierten Dauerstrichlaser.

10. Dioden-gepumpter Laser nach einem der vorangehenden Ansprüche mit einer Frequenzkonvertierungsvorrichtung.

## Revendications

1. Un laser à pompage par diode, fonctionnant en mode fondamental, comprenant :
o des moyens laser pour produire un faisceau lumineux de pompage (7) à taux d'aspect élevé, comprenant une matrice de pompage à diodes et des moyens optiques pour imager le faisceau lumineux de pompage (7) sur un spot asymétrique, avec un profil à intensité lisse, et
o un milieu laser (4), excité par ledit faisceau lumineux de pompage (7),
dans lequel :
- Le milieu laser (4) est lié à un dissipateur thermique (12), sur la face inférieure du milieu laser (4),
- le faisceau lumineux de pompage (7) est incident sur la face supérieure (4d) du milieu laser (4), et
- l'axe du faisceau lumineux de pompage (7) est positionné par rapport à l'axe (23) du mode laser, de manière que le mode laser soit actionné transversalement au flux de chaleur (K) et le laser à pompage par diode est pompé transversalement et refroidi transversalement.

2. Un laser à pompage par diode selon la revendication 1, dans lequel le mode laser est fortement elliptique dans ledit milieu laser (4).

3. Un laser à pompage par diode selon la revendication 2, **caractérisé en ce que** le taux d'aspect du mode laser est > 15:1.

4. Un laser à pompage par diode selon l'une des revendications précédentes, **caractérisé en ce que** le taux d'aspect du faisceau lumineux de pompage (7) est > 15:1.

5. Un laser à pompage par diode selon l'une des revendications précédentes, **caractérisé en ce que** le milieu laser (4) est un milieu laser à disque mince.

6. Un laser à pompage par diode selon l'une des revendications précédentes, **caractérisé en ce que** le faisceau lumineux de pompage (7) présente une configuration à saut double ou multiple.

7. Un laser à pompage par diode selon l'une des revendications précédentes, **caractérisé en ce que** la face inférieure du milieu laser (4) est muni d'un revêtement, pour réfléchir le faisceau lumineux de pompage (7).

8. Un laser à pompage par diode selon l'une des revendications précédentes, **caractérisé en ce que** le milieu laser (4) est lié au dissipateur thermique (12), par un feuil d'indium ou une colle, de préférence une colle conductrice de la chaleur.

9. Un laser à pompage par diode selon l'une des revendications précédentes, comprenant un dispositif à verrouillage de mode, de préférence un miroir absorbeur saturable à semi-conducteur, ou un laser à ondes continues, à conversion intra-cavité stable.

10. Un laser à pompage par diode selon l'une des revendications précédentes, comprenant un dispositif à conversion de fréquence.
